Europäisches Patentamt

European Patent Office

Office européen des brevets

(11) Veröffentlichungsnummer: **0 075 614**
**A1**

(12) **EUROPÄISCHE PATENTANMELDUNG**

(21) Anmeldenummer: 81107777.5

(22) Anmeldetag: 30.09.81

(51) Int. Cl.³: **A 01 G 1/04**

(43) Veröffentlichungstag der Anmeldung:
06.04.83 Patentblatt 83/14

(84) Benannte Vertragsstaaten:
AT BE CH DE FR GB IT LI LU NL SE

(71) Anmelder: Beck, Alfred
Calle 70 A no. 18-29
Bogotá - 2(CO)

(72) Erfinder: Beck, Alfred
Calle 70 A no. 18-29
Bogotá - 2(CO)

(74) Vertreter: Patentanwälte Beetz sen. - Beetz jun. Timpe -
Siegfried - Schmitt-Fumian
Steinsdorfstrasse 10
D-8000 München 22(DE)

(54) Verfahren zur selektiven Gewinnung von Mycelien und Fruchtkörpern von Basidiomyceten, Verwendung der Myceten und Vorrichtung zur Durchführung des Verfahrens.

(57) Das Verfahren sieht folgende Schritte vor:
(a) Herstellung eines Substrats ohne Kompostierung,
(b) Sterilisation des Substrats,
(c) Beimpfung des Substrats mit dem Pilzmycel,
(d) Überschichtung des beimpften Substrats mit einer Sperrschicht aus sterilisiertem Substrat, das bereits mit Mycel des gleichen Basidiomyceten durchwachsen ist
oder
Einfüllen in allseitig sterile Kunststoffbehälter oder -säcke mit gasdurchlässigem Verschluß
und
(e) Wachsenlassen des Mycels auf dem Substrat.
Wenn die Kultivierung der Fruchtkörper von Basidiomyceten anstelle der Mycelgewinnung angestrebt ist, werden ferner nach Schritt (e) folgende Schritte durchgeführt:
(f) Wachsenlassen bis zur Fruchtkörperbildung unter den dem jeweiligen Pilz entsprechenden Fruktifikationsbedingungen
sowie
(g) Ernten der Fruchtkörper.
Das Verfahren ermöglicht eine großtechnische Mycelherstellung, wobei das Mycel vorzugsweise mit einem für den menschlichen oder tierischen Genuß geeigneten Substratmaterial, beispielsweise einem Nahrungsmittel, hergestellt wird und eignet sich insbesondere zur Kultivierung von Shiitake (Lentinus edodes (Berk.) sing.) sowie von Champignons und anderen Speisepilzen.
Ferner werden erörtert Mycel-Trockenpräparate von Basidiomyceten, vorzugsweise zusammen mit dem zur Kultivierung des Mycels herangezogenen Substrat, insbesondere von Shiitake. Die Mycel-Trockenpräparate von Shiitake weisen pharmakologische Wirksamkeit auf.

./...

EP 0 075 614 A1

NICHTSTERIL

Verfahren zur selektiven Gewinnung von Mycelien
und Fruchtkörpern von Basidiomyceten, Verwendung
der Mycelien und Vorrichtung zur Durchführung des
Verfahrens

Die Erfindung betrifft ein Verfahren zur selektiven
Gewinnung von Mycelien von Basidiomyceten sowie zu ihrer
Kultivierung unter Gewinnung der Fruchtkörper, ferner
die Verwendung der Mycelien, vorzugsweise in Form von
Trockenpräparaten, für diätische Nahrungsmittel sowie
als Arzneimittel und eine Vorrichtung zur Durchführung
des Verfahrens. Das erfindungsgemäße Verfahrensprinzip
ist insbesondere auf die Herstellung von Mycelien des
asiatischen Speisepilzes Shiitake (Lentinus edodes
(Berk.) sing.) und die Fruchtkörpererzeugung von
Shiitake und Champignons anwendbar.

770-x2121-SF-Bk

Basidiomyceten (Ständerpilze) wie etwa der Champignon und der oben angegebene Speisepilz Shiitake werden seit Jahrhunderten kultiviert; der Pilz Lentinus edodes (Berk.) sing. (im folgenden kurz als Shiitake bezeichnet) wird in Ostasien und besonders in Japan wegen seines Nährwerts und insbesondere seiner Heilwirkung geschätzt. Die Produktion dieses Pilzes beträgt allein in Japan jährlich etwa 130.000 Tonnen, wovon etwa die Hälfte frisch verzehrt wird; der Rest wird in getrockneter Form verwendet und exportiert.

Typische Vertreter von Basidiomyceten, die nach dem erfindungsgemäßen Verfahren in Form ihrer Mycelien bzw. der Fruchtkörper kultivierbar sind, sind neben Shiitake beispielsweise:

| | |
|---|---|
| Agaricus bisporus | Champignon |
| Pleurotus ostreatus | Austernpilz |
| Valvariella volvacea | Strohpilz |
| Kuehneromyces mutabilis | Stockschwämmchen |
| Stropharia rugosa annulata | Rotbrauner Riesenträuschling |
| Flammulina velutipes | Samtfußrübling. |

In der westlichen Hemisphäre stellt der Champignon den bevorzugten Speisepilz dar; auch diesem Pilz werden Heilwirkungen zugeschrieben.

Von zahlreichen anderen eßbaren wie auch giftigen Basidiomyceten sind Heilwirkungen bekannt. Praktisch keiner dieser Pilze wurde jedoch bisher/technisch und kommer-

ziell verwertet, da die Pilze nur sporadisch und innerhalb begrenzter Wachtumszeiten in der Natur wachsen und nur für sehr wenige Basidiomyceten Kultivierungsverfahren erarbeitet werden konnten. Die Hauptgründe hierfür sind, daß viele Basidiomyceten sog. Mykorhiza -Pilze sind, die entsprechend in Symbiose mit höheren Pflanzen, meist Bäumen          leben; gerade in diesen Fällen sind die besonderen Bedingungen, unter denen das Pilzmycel zur Bildung von Fruchtkörpern kommt, nur außerordentlich schwer zu ermitteln, weshalb bisher für die allermeisten Basidiomyceten noch keinerlei Vorstellungen für technische Kultivierungsverfahren bestehen.

Lediglich einige wenige Basidiomyceten (/ hauptsächlich Shiitake, Champignon, Austernpilz, Stockschwämmchen) werden heute bereits außerhalb ihres natürlichen Habitats kultiviert, wobei auf kleinen und auf den günstigsten Umweltbedingungen gehaltenen Anlagen größere Erträge als in der freien Natur erzielt werden.

Die Kultivierung erfolgt zumeist auf besonders präparierten Nährböden (Substraten) aus organischen Abfallstoffen. Für die Champignonkultivierung wird zB ein Champignon-Kompost auf der Basis von Pferdemist oder Stroh verwendet, als Austernpilz-Substrat werden Stroh- oder Maisstrohgemische verwendet; Shiitake und Stockschwämmchen werden auf Holz kultiviert.

Der Skiitake (shii = jap. Eiche, take = jap. Pilz) ist der bisher am meisten untersuchte Ständerpilz. Er wächst in Ostasien in der freien Natur hauptsächlich auf Eichenholz. Zur Kultivierung werden deshalb ebenfalls zumeist Eichenstämme von etwa 1,5 m Länge und 5 bis 15 cm Dicke verwendet, die mit Shiitakemycel beimpft werden. Die Eichenstämme werden dann unter günstigen Wärme- und Feuchtigkeitsbedingungen in Wäldern aufgestellt. Der Shiitake hat eine Anlaufzeit von etwa 9 bis 12 Monaten bis zur ersten Fruchtkörperbildung; die Gesamtkulturzeit, während der in sporadischen Abständen geerntet werden kann, beträgt 5 bis 7 Jahre, wobei von einem Stammstück von etwa 15 cm Durchmesser insgesamt nur etwa 5 kg Shiitake, dh knapp 0,5 kg Shiitake-Trockensubstanz, geerntet werden können.

Trotz intensiver weltweiter Bemühungen konnte bisher kein technisch anwendbares Kultivierungsverfahren für Shiitake ohne Anwendung der üblichen Kultivierungstechnologie auf Eichenholz gefunden werden.

Zu den pharmakologischen Wirkungen von Shiitake existiert eine außerordentlich umfangreiche Fachliteratur (Übersichtsarbeiten: Brigitte Sous-Dorn, Der Shii-take, Lentinus edodes (Berk.) sing. - Ein möglicher Kulturpilz in Europa, Versuchsanstalt für Pilzanbau, Krefeld 1980, mit umfangreichen Literaturangaben, ferner K. Mori, Mushrooms as Healthfoods, japanische Originalausgabe publiziert von Kobunsha, Ltd., Tokyo, 1974 (englische Übersetzung Japan Publications, Inc., Tokyo, 1974, erhältlich über Japan Publications Trading Company, Tokyo, Japan).

Einer der wesentlichen Wirkstoffe von Shiitake ist das Eritadenin, dem in der Hauptsache die blutdrucksenkende, cholesterinsenkende und harnsäuresenkende Wirkung von Shiitake zugeschrieben wird, die in umfangreichen Versuchen klinisch nachgewiesen ist. Insbesondere der cholesterinsenkenden Wirkung kommt hierbei große Bedeutung zu, da Hypercholesterinämien insbesondere bei Diabetes mellitus, Atherosklerose, Infarktgefährdung sowie etwa Hämorrhoiden eine physiologisch kausale Rolle spielen. Shiitake enthält ferner ein antitumoral wirksames Polysaccharid, das ebenfalls bereits experimentell untersucht ist. Shiitake wird ferner neben anderen günstigen Wirkungen auf den Organismus eine antivirale Wirksamkeit zugeschrieben, die möglicherweise auf der interferonbildungsfördernden Wirkung anwesender Viren beruht.

Es besteht daher sowohl aus nahrungsmittelchemischer als auch vor allem aus pharmakologischer Sicht ein ausgeprägtes und in jüngster Zeit erheblich steigendes Interesse an der Verfügbarkeit großer Mengen von Shiitake als Nahrungs- wie als Heilmittel. Dieses weltweit steigende Bedürfnis konnte jedoch bisher auch nicht annähernd befriedigt werden, da die sehr anspruchsvolle und vor allem zeitaufwendige Kultivierung von Skiitake eine entsprechende Ausweitung des Verbrauchs an diesem Pilz verhindert. Für einen weltweiten Bedarf von etwa 600 Tonnen Shiitake täglich, was eher sehr gering geschätzt ist, müßten für die bisherige Kultivierungsweise, abgesehen vom völlig unrealistischen Arbeitskräftebedarf, einige 10.000 Hektar Eichenwald jährlich geschlagen werden; bereits aus diesen Überlegungen wird ersichtlich, daß auf der Basis der bisherigen Kultivierungsverfahren keinerlei Chance für eine gewerbliche Verwendung von Shiitake und Shiitake-Produkten
in größerem Umfang als bisher bestand.

Ähnliche Probleme treten bei der Kultivierung
von Champignons auf. Aus der Literatur (Gerrits, Der :
Champignon 175 (1976) 23    ) ist bekannt, daß für
die Erzeugung von 1 kg Champignon 220 g Trockensubstanz aus dem Kompost erforderlich sind, von denen 130 g (60 %) verbraucht und 90 g (40 %) assimiliert werden. Die Hälfte der Trockensubstanz  wird
jedoch schon bei der Kompostierung verbraucht, wobei hinzu kommt, daß die Trockensubstanz nicht gleichmäßig abgebaut wird, sondern selektiv die bevorzugten
Pilznährstoffe, nämlich Mono-, Di- und Trisaccharide
sowie Polysaccharide, verbraucht werden. Von Champignonzüchtern wird daher die Erzeugung von 1 g Champignon-
Trockensubstanz aus 30 g Ausgangs-Komposttrockensubstanz
als sehr gutes Resultat angesehen.

Im einzelnen wird der Champignon zumeist auf
Pferdemist kultiviert, wobei der Mist vor der Beimpfung
mit Champignonbrut kompostiert wird, um daraus einen
spezifisch für Champignons geeigneten Nährboden herzustellen. Hierbei besteht die Vorstellung, daß durch
die Kompostierung besonders für diesen Pilz geeignete
Nährstoffe gebildet würden. Heute ist jedoch bekannt,
daß diese spezifische Eignung in der fast vollständigen Vernichtung der von Bakterien, Hefen und niederen
Pilzen, aber auch vom Champignon selbst, bevorzugten und leicht verwertbaren Kohlenhydrate sowie in der Bildung von Antibiotika durch Aktinomyceten besteht, die den Kompost in der letzten Herstellungsphase, der Pasteurisierung, im Temperaturbereich um 52 °C stark bevölkern. Im Gegensatz zu den anderen genannten Organismen ist der Champignon gegen diese Antiobiotika nicht empfindlich.

Bei dieser herkömmlichen Verfahrensweise ist besonders nachteilig, daß sie zum einen sehr arbeits- und zeitaufwendig ist und zum anderen etwa 50 % der anfänglichen Trockensubstanz verloren gehen, wobei der Verlust unerwünschterweise hauptsächlich bei den Kohlenhydraten liegt.

Im Max-Planck-Institut für Kulturpflanzenzüchtung, Hamburg-Volksdorf, (vgl R. v. Sengbusch, 6. Internationaler Kongreß für Champignonwissenschaft, 1965, 389 ) wurde vor etwa 20 Jahren versucht, einen neuen Weg zur Champignonzucht zu beschreiten. Im Rahmen der dortigen Untersuchungen wurde festgestellt, daß die Bakterien der Deckerde in einer ursächlichen Beziehung zur Fruchtkörperbildung des Champignons stehen. Ferner wurde festgestellt, daß die Vergärung des Nährsubstrats für die Champignonkultur nicht unerläßlich ist, da auch auf nicht vergorenem, dh nicht kompostiertem Stroh mit entsprechenden Zusätzen normale Champignonerträge erzielt werden können. Voraussetzungen hierfür sind allerdings Sterilität des Nährsubstrats, eine sterile Beimpfung mit dem Pilzmycel und ein Sterilbleiben der Kulturen bis zum vollständigen Durchwachsen des Nährsubstrats. Anschließend folgt eine unsterile Phase durch die Überschichtung mit von Bakterien durchsetzter Deckerde. Dabei ist interessant, daß die Bakterien bei den Verfahrensschritten, bei denen sie früher für unumgänglich notwendig gehalten wurden, nämlich bei der Herstellung des Nährsubstrats, absolut entbehrlich sind, während sie in der Deckerde unbedingt anwesend sein müssen, da sonst eine Champignonkultivierung nicht möglich ist.

Diese Verfahrensweise zur Champignonkultivierung konnte zwar in einen größeren Maßstab übertragen werden (1000 bis 1500 kg Nährsubstrat täglich), jedoch traten bei der Übertragung dieses Verfahrens in den technischen Maßstab, insbesondere hinsichtlich der Sterilität des Nährsubstrats und der Brut, derartig große Probleme auf, daß sich eine industrielle Champignonproduktion nach diesem Verfahren als undurchführbar erwies, weshalb entsprechende Untersuchungen etwa 1970 eingestellt wurden.

Angesichts der auch beim Champignon auftretenden, oben erläuterten Kultivierungsschwierigkeiten bestand daher auch für diese Art von Speisepilzen ein außerordentlich großes Bedürfnis nach der Entwicklung einer einfacheren und zugleich produktiveren Verfahrensweise, die eine deutliche Ertragssteigerung ergibt.

Die Erfindung geht von der Überlegung aus, daß die Fruchtkörper der Basidiomyceten (Ständerpilze, Hutpilze) aus feinem Mycelgeflecht bestehen, wie dem Biologen geläufig ist. Das eigentliche Pilzmycel, aus dem sich der Fruchtkörper während der Reifezeit bildet, verbleibt dabei im Boden bzw im Substrat und ist daher bisher einer kommerziellen Ausnutzung nicht zugänglich. Im Rahmen der Erfindung wurde nun vermutet, daß die Nährstoffe sowie die Substanzen mit pharmakologischer Wirkung (beispielsweise bei Shiitake) nicht nur im Fruchtkörper, sondern aufgrund der im Prinzip ähnlichen Struktur und Morphologie auch im Mycel vorhanden sind, es also für die Herstellung diätetisch oder pharmakologisch wirksamer Produkte genügen sollte, das Pilzmycel zu kultivieren und als solches weiterzuverarbeiten, ohne die mit großen Kultivierungsrisiken und langem Zeitbedarf behaftete Fruchtkörperbildung abzuwarten.

Im Rahmen der Erfindung wurde festgestellt, daß diese Prämisse tatsächlich zutrifft.

Wenn von der Verwendbarkeit des Pilzmycels als solchem ausgegangen wird, resultiert allerdings das gravierende Problem, die fast immer sehr dünnen und empfindlichen Mycelfäden vom Substrat zu trennen. Bei Verwendung von Nährböden etwa auf der Basis von Agar Agar kann dieses Material aufgrund seiner Wasserlöslichkeit zwar einfach mit Wasser ausgewaschen werden, jedoch besteht bei einer derartigen Verfahrensweise die Gefahr, daß durch den Waschvorgang auch ein erheblicher Teil der angestrebten Pilzsubstanzen mitextrahiert wird. Mechanische bzw physikalische Trennungen von Mycel und Substrat sind andererseits aufgrund der sehr komplexen Struktur solcher Systeme völlig ausgeschlossen.

Der Erfindung liegt die Aufgabe zugrunde, ein neuartiges Verfahren zur selektiven Gewinnung des Mycels von Basidiomyceten anzugeben, das sich auch zur Kultivierung dieser Pilze unter Erhalt der Fruchtkörper anwenden läßt, und ferner die Verwendung des Mycels bestimmter Basidiomyceten wie Shiitake in geeigneter Form als oder in Nahrungsmitteln bzw diätetischen Präparaten sowie als bzw in pharmazeutischen Mitteln anzugeben. Ferner soll eine Vorrichtung entwickelt werden, mit der sich das Verfahren günstig durchführen läßt.

Die Aufgabe wird anspruchsgemäß gelöst.

Das erfindungsgemäße Verfahren zur selektiven Gewinnung von Mycelien von Basidiomyceten ist durch folgende Schritte gekennzeichnet:

(a) Herstellung eines Substrats ohne Kompostierung,

(b) Sterilisation des Substrats,

(c) Beimpfung des Substrats mit dem Pilzmycel,

(d) Überschichtung des beimpften Substrats mit einer Sperrschicht aus sterilisiertem Substrat, das bereits mit Mycel des gleichen Basidiomyceten durchwachsen ist,

oder

Einfüllen in allseitig sterile Kunststoffbehälter oder -säcke mit gasdurchlässigem
Stopfen

und

(e) Wachsenlassen des Mycels auf dem Substrat.

Diese Verfahrensweise wird angewandt, wenn das
Mycel der Basidiomyceten gewonnen werden soll.

Falls die Fruchtkörper gewonnen werden sollen,
wird zunächst wie in den Schritten (a) bis (e) verfahren, wobei dann folgende Verfahrensschritte angeschlossen werden:

(f) Wachsenlassen bis zur Fruchtkörperbildung
    unter den dem jeweiligen Pilz entsprechenden
    Fruktifikationsbedingungen

    und

(g) Ernten der Fruchtkörper der Basidiomyceten.

Als Substratmaterialien können erfindungsgemäß
im Prinzip fast alle Materialien pflanzlichen Ursprungs
verwendet werden, als Zuschlagstoffe, zB zur Einstellung des günstigsten Gehalts an Eiweiß oder bestimmten Aminosäuren, auch solche tierischer Herkunft.
Viele davon werden bereits in der üblichen Champignonzucht als Substrat- oder Zuschlagmaterialien zu Pferdemist oder in sog. synthetischen Komposten verwendet.
Im Gegensatz zur üblichen Champignonzucht und auch zu
den Arbeiten des Max-Planck-Instituts in Hamburg, bei
denen zur Herstellung der Komposte bzw Sterilsubstrate
von trockenen Materialien, zB von Stroh, Torf, Heu
udgl, ausgegangen wurde, sind erfindungsgemäß auch Frischpflanzen verwendbar, zB frisch geschnittenes, saftiges Gras.

Wenn nach dem erfindungsgemäßen Verfahren Fruchtkörper von Basidiomyceten kultiviert werden sollen, steht somit ein erheblich breiteres Spektrum an Rohmaterialien zur Verfügung als für die herkömmlichen Verfahren.

Wenn erfindungsgemäß das Mycel erzeugt wird, das zur Herstellung von Nahrungsmitteln, Nährmitteln, diätetischen Nahrungsmitteln oder pharmazeutischen Mitteln verwendet werden soll, ist die Materialauswahl lediglich mit Rücksicht auf die dann geforderte Eignung für den menschlichen Genuß geringer. Nahrungsmittel, Heilpflanzen, Gemüse sowie deren Nebenprodukte und Gemische stellen jedoch erfindungsgemäß ein ausreichend großes Sortiment zur Herstellung von Substraten dar, die nährstoffmäßig und strukturmäßig den jeweils angestrebten Basidiomyceten entsprechen.

Wenn erfindungsgemäß ferner das Mycel als Rohmaterial zur Extraktion pharmakologischer Wirkstoffe herangezogen wird, steht ebenfalls das ganze Spektrum der Rohmaterialien zur Verfügung.

Die anschließende Sterilisation des Substrats im Verfahrensschritt (b) sowie die Beimpfung des Substrats mit Pilzmycel in Schritt (c) sind an sich bekannt. Das frisch beimpfte, sterile Substrat kann nun nicht einfach beispielsweise in einem allseitig abgeschlossenen sterilen Behälter aufbewahrt und weiterkultiviert werden, da das Pilzmycel Sauerstoff aufnimmt und Kohlendioxid abgibt, also ein Austausch der beim Stoffwechsel gebildeten und verbrauchten Gase mit der Außenumgebung erforderlich ist.

Erfindungsgemäß wird daher in Schritt (d) das beimpfte Substrat mit einer Sperrschicht von etwa 3 bis 5 mm Dicke abgedeckt, die aus sterilisiertem Substrat besteht, das bereits mit Mycel des gleichen Basidiomyceten durchwachsen ist; das Substrat wird dabei in allseitig sterilisierte Plastikschalen eingebracht.

Eine Alternative besteht in Schritt (d) darin, das beimpfte Substrat in allseitig sterilisierte Kunststoffbehälter oder Kunststoffsäcke einzubringen, die nach dem Füllen mit gasdurchlässigen Stopfen oder ähnlichen Verschlußeinrichtungen, die einen Gasaustausch ermöglichen, verschlossen werden.

Bei beiden erfindungsgemäßen alternativen Verfahrensweisen kann die Weiterkultivierung des beimpften Substrats, dh das Durchwachsen des Mycels, in nicht sterilen Räumen erfolgen. Da bei dem sehr intensiven Mycelwachstum in Schritt (e) Wärme entsteht, die ebenfalls durch die Belüftung abgeführt werden muß, ist es erfindungsgemäß bevorzugt, mindestens den Verfahrensschritt (e) in Anwachsräumen durchzuführen, die mit Sterilfilteranlagen bewettert werden.

Die alternativen Maßnahmen des Verfahrensschritts (d) schützen das mit Pilzmycel beimpfte Sterilsubstrat einerseits gegen Infektion durch andere Pilze, Bakterien, Hefen udgl und sichern andererseits den erforderlichen Gasaustausch, da die Sperrschicht bzw die verwendeten Verschlüsse der Kunststoffbehälter zwar gasdurchlässig, nicht jedoch für Mikroorganismen durchlässig sind.

Im Fall der Mycelproduktion endet das Verfahren mit dem Verfahrensschritt (e), an den sich das Ernten des Mycels anschließt.

Im Fall der Fruchtkörpererzeugung wird das volldurchwachsene Substrat anschließend den Sonderbedingungen ausgesetzt, unter denen die Fruchtkörperbildung erfolgt. Im Fall des Champignons wird das Substrat beispielsweise mit unsteriler, normaler Deckerde abgedeckt, wie an sich bekannt ist.

Bei der Kultivierung von Champignons/zur Fruchtkörpererzeugung
kann ferner erfindungsgemäß auch so verfahren werden,
daß das in Schritt (d) mit einer Sperrschicht überschichtete beimpfte Substrat ferner mit normaler
Deckerde überschichtet wird, die die Sperrschicht
abdeckt, worauf das Material anschließend in normale
Erntehäuser verbracht werden kann.

Diese Verfahrensweise führt zu einer sehr raschen
Fruchtkörperernte, da während der Durchwachszeit
des Mycels im Substrat/,die etwa 5 Tage beträgt, das Mycel auch
schon von der Sperrschicht aus in die Deckerde einwächst, wobei die Sperrschicht und die Schicht des beimpften Substrats zu einer einzigen Schicht verwachsen.

Die Mycelgewinnung ist insbesondere bei Shiitake
nach der herkömmlichen Verfahrensweise völlig unmöglich, da das Mycel nicht aus dem Eichenholz, in das
es eingewachsen ist, entfernt werden kann.

Die Trennung des Mycels vom Nährboden wird erfindungsgemäß unnötig, wenn als Nährboden ein für
den menschlichen oder tierischen Genuß geeignetes
Material, insbesondere ein Nahrungsmittel, verwendet
wird. In diesem Fall bildet sich während des Verfahrensschritts (e) ein neues Nahrungsmittel, das
zum Teil aus dem gewachsenen Mycel und zum anderen
Teil aus den vom Mycel nicht verwerteten Bestandteilen
des Nahrungsmittels besteht. Es resultiert also ein
neues, zugleich noch immer natürliches Nahrungsmittel,
das die Eigenschaften beider Bestandteile in sich vereinigt. Dies gilt insbesondere für den Nährwert sowie für Komponenten mit pharmakologischer Wirkung.

Während die Anzucht von Shiitake-Fruchtkörpern / nach dem üblichen Verfahren mindestens 9 Monate Anlaufzeit und danach Jahre für die Ernte in Anspruch nimmt, kann nach dem erfindungsgemäßen Verfahren bei diesem Pilz Shiitake-Trockensubstanz in industriellen Mengen innerhalb von 14 Tagen hergestellt werden. Gleiches gilt für Champignons und zahlreiche andere Ständerpilze.

Durch die erfindungsgemäße Verfahrensweise wird, abgesehen vom Zeitgewinn, der völlig unerwartete und zugleich außerordentlich bedeutsame Vorteil einer erheblichen Ausbeutesteigerung erzielt, die bei Champignons beispielsweise größenordnungsmäßig dem Faktor 10 entspricht.

Derartige Ausbeuteverbesserungen sind angesichts der jahrhundertelangen Bemühungen bei der Kultivierung insbesondere von Shiitake und Champignons absolut überraschend und zeigen zugleich die ausgezeichnete Wirkung des erfindungsgemäßen Verfahrenskonzepts, besonders hinsichtlich der Verfahrensschritte (a), (b) und (d).

Nachdem das Mycel von Shiitake einen mindestens vergleichbaren Wirkstoffgehalt wie der Fruchtkörper aufweist, kann folglich nach dem erfindungsgemäßen Verfahren auf außerordentlich wirtschaftliche Weise Pilzmaterial erzeugt werden, zumal die Reifung der Fruchtkörper, die erfindungsgemäß zudem erheblich schneller erfolgt als bei bisherigen Verfahren, nicht abgewartet werden muß.

Ein besonderes Problem stellt die an sich bekannte Sterilisation der Substrate dar. Bisher wurden, beispielsweise für Champignonsubstrate, Plastikschalen mit Deckel von etwa 4 l Inhalt und später Eisenfässer mit etwa 200 l Inhalt verwendet. Bei Verwendung von Eisenfässern betrug die Dauer der Sterilisation einschließlich der Abkühlung etwa 18 h. Das Durchwachsen der Substratmasse in den Fässern erforderte dann etwa 4 bis 6 Wochen, da in den geschlossenen Fässern die Brut nicht gleichmäßig in das Substrat eingemischt werden konnte. Derartige Sterilisations- und Wachstumszeiten sind aus praktischer Sicht völlig ungeeignet.

Die Sterilisation von Substraten ist ein in Wissenschaft und Praxis allgemein angewandtes Verfahren.

Die erfindungsgemäß verwendeten Substrate sind jedoch wegen der Art der Rohstoffe, die meist schlechte Wärmeleiter sind, der Struktur der Rohstoffe sowie der relativ geringen Feuchte der Substrate schwierig zu sterilisieren, wobei mit der allgemein angewandten Verfahrensweise (Sterilisation vorgemischter, auf den gewünschten Wassergehalt gebrachter, in Kulturgefäße gefüllter und in im Autoklaven fest stehende oder liegende oder sich bewegende geschlossene Behälter gebrachter Substrate) lange Sterilisierzeiten erforderlich sind und nur geringe Durchsätze für eine gegebene Autoklavengröße erzielt werden.

Erfindungsgemäß werden statt dessen die Kulturgefäße in den Autoklaven eingesetzt und auf einem Gestell befestigt, das sich mit ihnen während der Sterilisation im Autoklaven um eine horizontale Längsachse dreht. Hierbei ist das Material zwar verpackt, es wird jedoch innerhalb der Kulturgefäße durch die Drehbewegung aufgebrochen und läuft ähnlich wie das Gut in einer Kugelmühle um, wodurch die Materialteilchen mit der Drehzahl entsprechender Häufigkeit an die Oberfläche und damit in direkten Kontakt mit dem als Sterilisiermittel verwendeten Dampf kommen, was zu erheblich verkürzten Sterilisierzeiten und entsprechend größeren Durchsätzen im Autoklaven führt.

Alternativ dazu kann erfindungsgemäß in Schritt (b) die Sterilisation des Substrats ohne jegliche Verpackung in dünner Schicht kontinuierlich oder diskontinuierlich durchgeführt werden. Hierfür wird vorzugsweise ein Autoklav verwendet, in dem das Substrat unter gleichzeitiger Umwälzung und in dünner Schicht mit Dampf unter Überdruck sterilisiert wird.

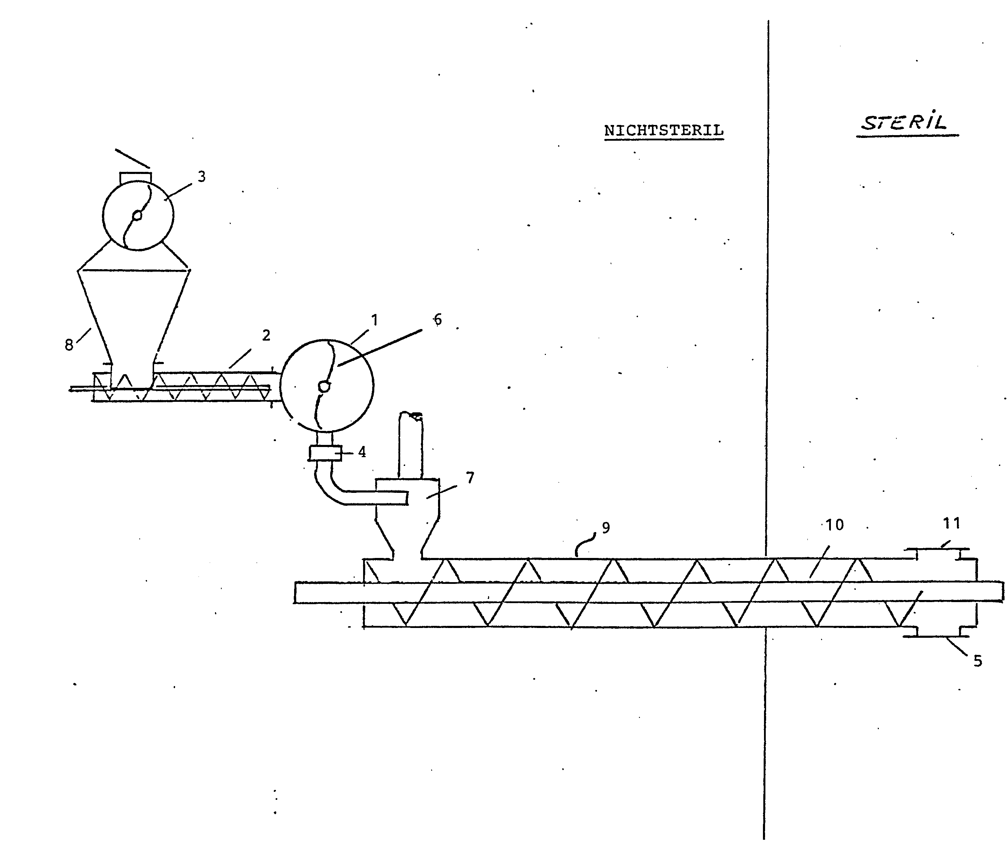

Für diesen Verfahrensschritt eignet sich besonders die erfindungsgemäße Vorrichtung, die in der Zeichnung dargestellt ist. Sie umfaßt als wesentlichen Bestandteil einen Autoklaven 1 mit Ein- und Auslaßventilen für Dampf, einer Eintragvorrichtung 4 am anderen Ende sowie einer Umwälzeinrichtung 6 für das eingesetzte Sterilisationsgut. Die Aufgabe des zu sterilisierenden Substrats erfolgt über einen Mischer 3 und ein Silo 8. Als Eintragvorrichtung ist vorzugsweise eine Dosierschnecke (Druckschnecke) vorgesehen.

Das über das Ventil 4 eingetragene Gut gelangt über einen Zyklon 7 in den Kühler 9 mit einer Umwalzvorrichtung 10, der an der anderen Seite eine Austragvorrichtung 5 aufweist, durch die das sterilisierte Gut aus der Vorrichtung ausgetragen wird; sie besteht beispielsweise aus einem Auswurfventil, einer Schleuse oder einer ähnlichen Vorrichtung .oder einem Fallschacht.

In der Längsachse des Autoklaven 1 ist ein rotierendes Schaufelsystem 6 oder ein rotierendes Schneckensystem vorgesehen, das das eingetragene Gut umwälzt und in dünner Schicht unter Vermeidung von Verklumpungen und Ansammlung größerer Substratmengen der Gasphase exponiert. Am Entnahmeende der Vorrichtung kann ferner eine zusätzliche Eintragvorrichtung 11 vorgesehen sein, die zur Zuführung von Beimpfungsmaterial dient; in diesem Fall kann bei gleichzeitiger Sterilisation, Kühlung und Einführung von Beimpfungsmaterial über die Eintragvorrichtung 11 eine Verfahrensvereinfachung durch integrierte Vornahme der Verfahrensschritte (b) und (c) realisiert werden. In diesem Fall kann der Hauptteil der erfindungsgemäßen Vorrichtung in einem nicht sterilen Raum vorgesehen werden, da sich lediglich das Ende mit der Eintragvorrichtung 11 und der Austragvorrichtung 5 unter sterilen Bedingungen befinden muß. Dieses Ende des Kühlers 9 wird entsprechend vorzugsweise in einem sterilen Raum vorgesehen.

Erfindungsgemäß wird unter Verwendung der obigen Vorrichtung etwa 3 min bei 128 °C sterilisiert und etwa 3 min abgekühlt. Insgesamt sind also etwa 6 min Verweilzeit vom Einbringen des Materials in den Autoklaven bis zum Austritt des beimpften Materials aus dem Kühler erforderlich, was gegenüber den bisherigen, ausschließlich diskontinuierlichen Sterilisationsverfahren außerordentlich fortschrittlich ist.

Die erfindungsgemäße Vorrichtung arbeitet vorzugsweise kontinuierlich.

Die kurze Sterilisierzeit ist ausreichend, da das Substrat in unverpackter Form, also locker und lose, eingetragen und durch das umlaufende Schaufelsystem während der gesamten Verweilzeit stets in direktem Kontakt mit dem zur Sterilisation verwendeten Dampf gehalten wird.

Die erfindungsgemäße Vorrichtung wird vorzugsweise so ausgebildet, daß sie für eine Flash-Entspannung geeignet ist, also für eine Verfahrensweise, bei der die Entspannung vom Autoklavendruck zum Atmosphärendruck schlagartig erfolgt. Hierdurch wird neben der Verbesserung der Sterilisationswirkung eine Desintegration der zu sterilisierenden organischen Rohmaterialien und eine Zerstörung etwa noch vorliegender Mikroorganismen, Pilzsporen udgl erzielt.

Wenn das Beimpfungsmaterial in die Eintragvorrichtung 11 am Ende des Kühlers 9 unter sterilen Bedingungen eingebracht wird, wird so verfahren, daß die Brut in gleichmäßigem Strom aus Anzuchtgläsern direkt in das etwa 29 °C warme, aus der Vorrichtung austretende Substrat einrieselt und mit ihm vermischt wird.

Die Flash-Entspannung wird vorzugsweise so vorgenommen, daß das Ventil 4 der Austragvorrichtung beim Öffnen jeweils eine bestimmte Menge Substrat in den Zyklon 7 ausstößt, wobei im Zyklon und im anschließenden Kühler 9 gegenüber dem Druck im Autoklaven 1 ein geringerer Druck, vorzugsweise Atmosphärendruck vorliegt, wodurch eine explosionsartige Teilverdampfung des Wassers, zum Teil auch in den Zellen, erfolgt.

Es ist zu vermuten, daß die erfindungsgemäß erzielten außerordentlichen Verfahrensvorteile zum Teil auch durch die Flashverdampfung und damit den besseren Aufschluß und die hierdurch bessere Ausnutzung des Substrats durch das Pilzmycel bedingt sind, insbesondere hinsichtlich der erzielten hohen Erträge.

Die Vorrichtung wird vorzugsweise so angeordnet, daß das aus der Austrageinrichtung 5 austretende, mit dem Beimpfungsmaterial gemischte Substrat direkt in die Durchwachsbehälter fällt.

Die Durchwachszeit beträgt bei Verwendung von 2,5 Gew.-% Hirsebrut etwa fünf Tage.

Das erfindungsgemäße Verfahren eignet sich neben den oben genannten Pilzen insbesondere auch für die Mycelgewinnung und Kultivierung von

Lactarius deliciosus,

Calocybe gambosa,

Hypholoma hydrophylum,

Coprinus comatus,

Clytocybe nebularis,

Lepista nuda,

Pleurotus mutilus,

Marasmius ramealis,

Oudemansiella radicata

Calvatia gigantea sowie etwa

Flammulina velutipes.

Das Erfindungskonzept bringt zahlreiche Vorteile:

Die Basidiomyceten bevorzugen beim Wachsen in der freien Natur sehr unterschiedliche Nährböden; es ist überraschend und günstig, daß für die meisten Ständerpilze etwa gleiche erfindungsgemäße Substrate verwendet werden können, wenn nach dem erfindungsgemäßen Verfahren gearbeitet wird.

Die Kultivierungszeit sowohl zur Gewinnung von Mycelien als auch zur Gewinnung der Fruchtkörper ist erfindungsgemäß außerordentlich reduziert, was wirtschaftlich sehr vorteilhaft ist.

Die erhaltenen Mycelien wie auch Fruchtkörper sind von besonderer Reinheit, da sie praktisch keinen Fremdbewuchs aufweisen, was insbesondere durch den Verfahrensschritt (d) bedingt ist.

Die Erträge sind erfindungsgemäß außerordentlich hoch: Während bei Champignons herkömmlicherweise Erträge bis etwa 30 % des Substrat-Feuchtgewichts erzielt werden, führt das erfindungsgemäße Verfahren zu einem mehr als doppelt so hohen Ertrag, der über 80 % erreichen kann.

Ein besonderer Vorteil liegt darin, daß zur Mycelzucht Nahrungsmittel verwendet werden können, die mit dem Mycel zusammen neue Nahrungsmittel bilden, die die Eigenschaften des Pilzes und die Eigenschaften des ursprünglich eingesetzten Nahrungsmittels gleichzeitig aufweisen.

Damit liegt zugleich das erste wirtschaftliche und technisch anwendbare Verfahren zur industriellen Gewinnung von Pilzmaterial vor, insbesondere auch für pharmakologische Zwecke.

Besonders wichtig ist im Rahmen der Erfindung ferner, daß die Mycelmassen, die auf einer gegebenen Substratmenge wachsen, im Erntezeitpunkt stets größer sind als die Masse der darauf erntbaren Fruchtkörper. Daraus folgt, daß die Verwendung des Mycels für bestimmte Verwendungszwecke auch aus dieser Sicht erheblich günstiger ist. Das Mycel beispielsweise von Shiitake ist ferner noch reicher an wertvollen Substanzen ist als der Fruchtkörper (bei Shiitake liegt beispielsweise ein Gehalt von 22 Gew.-% Protein in der Trockensubstanz des Fruchtkörpers vor, während der Proteingehalt in der Trockensubstanz des Mycels 34 % beträgt.

Die Produktionszeit des Mycels ist in allen Fällen erheblich kürzer als die des Fruchtkörpers; bei Shiitake liegt der Extremfall vor, daß für die Mycelerzeugung nur zwei Wochen erforderlich sind, während die Fruchtkörperbildung 40 bis 350 Wochen in Anspruch nimmt.

Ein weiterer Vorteil des erfindungsgemäßen, zu Mycelien führenden Verfahrens besteht darin, daß Kulturverfahren zur Erzeugung von Fruchtkörpern nur für etwa ein Dutzend Basidiomyceten bekannt sind, jedoch das Mycel von sämtlichen Pilzen nach dem erfindungsgemäßen Verfahren gewonnen werden kann.

Die Erfindung betrifft ferner die pharmakologische Verwendung von Trockenpräparaten auf der Basis von Basidiomyceten-Mycelien, insbesondere von Shiitake. Derartige Trockenpräparate können sowohl durch Trennung des Substrats vom Mycel, etwa durch Extraktion, und anschließende Trocknung als auch durch Verwendung des mycelbewachsenen Substrats erhalten werden, wobei dann das mycelbewachsene Substrat getrocknet und zerkleinert, gegebenenfalls mit Zusätzen versetzt und schließlich feuchtigkeitsdicht verpackt wird.

Derartige Trockenpräparate eignen sich insbesondere für diätetische Nahrungsmittel und als Heilmittel bzw Zusätze für Heilmittel, da die erfindungsgemäßen Mycel-Trockenpräparate in pharmakologischer Hinsicht mindestens ebenso wirksam sind wie herkömmliche Präparate, die aus Shiitake-Fruchtkörpern erhalten wurden, wie aus einer vergleichenden Untersuchung zur Behandlung von Hyperlipidämien hervorgeht, die mit einem erfindungsgemäßen Trockenpräparat durchgeführt wurde (Versuchsbericht von D. M. Melo, G. L. Agudelo, A. D. de Sierra, Zentrum für Integrierte Medizin, Cota - Cundinamarca, Kolumbien,Februar 1981). In diesen Versuchen wurden der Gesamtblutfettgehalt, der Gesamtcholesteringehalt sowie der Gehalt an Lipoprotein hoher Dichte (HDL-C), Lipoprotein geringer Dichte (LDL-C) und Lipoprotein besonders geringer Dichte (VLDL-C) sowie der Gehalt an Triglyceriden und Blutzucker an 18 erwachsenen Patienten (11 Frauen, 7 Männern) ermittelt, von denen 12 sehr erhöhte Blutfettspiegel aufwiesen. Die Behandlung wurde durch Verabreichung eines erfindungsgemäßen Mycel-Trockenpräparats von Shiitake während einer Behandlungsdauer von 30 Tagen durchgeführt. Die Patienten wurden 6 Wochen beobachtet, wobei festgestellt wurde, daß die erfindungsgemäßen Mycel-Trockenpräparate von Shiitake eine hohe cholesterinsenkende Wirkung aufweisen.

Ferner wurde festgestellt, daß die Nährwirkung wie auch die Heilwirkung von Shiitake-Mycel-Trockenpräparaten praktisch nicht nährbodenabhängig sind.

Das erfindungsgemäße Verfahren und die erfindungsgemäße Vorrichtung eröffnen daher einen völlig neuen Zugang zur Kultivierung von Mycelien und Fruchtkörpern von Basidiomyceten.

**0075614**

<u>A n s p r ü c h e</u>

1. Verfahren zur selektiven Gewinnung von Mycelien von Basidiomyceten,

g e k e n n z e i c h n e t  d u r c h  folgende wesentlichen Schritte:

(a) Herstellung eines Substrats ohne Kompostierung,

(b) Sterilisation des Substrats,

(c) Beimpfung des Substrats mit dem Pilzmycel,

(d) Überschichtung des beimpften Substrats mit einer Sperrschicht aus sterilisiertem Substrat, das bereits mit Mycel des gleichen Basidiomyceten durchwachsen ist,

oder

Einfüllen in allseitig sterile Kunststoffbehälter oder -säcke mit gasdurchlässigem Verschluß

und

(e) Wachsenlassen des Mycels auf dem Substrat.

2. Verfahren zur Kultivierung von Fruchtkörpern von Basidiomyceten, gekennzeichnet durch die Schritte (a) bis (e) nach Anspruch 1 und ferner

770-x2121-SF-Bk

(f) Wachsenlassen bis zur Fruchtkörperbildung unter den dem jeweiligen Pilz entsprechenden Fruktifikationsbedingungen

sowie

(g) Ernten der Fruchtkörper der Basidiomyceten.

3. Verfahren nach Anspruch 1 oder 2, dadurch gekennzeichnet, daß in Schritt (a) als Substrat frisch geschnittenes Gras, frisches Gemüse oder andere Frischpflanzen verwendet werden.

4. Verfahren nach Anspruch 1 oder 2, dadurch gekennzeichnet, daß in Schritt (a) als Substrat ein für den menschlichen Genuß geeignetes Material verwendet wird.

5. Verfahren nach Anspruch 4, dadurch gekennzeichnet, daß in Schritt (a) als Substrat ein Nahrungsmittel verwendet wird.

6. Verfahren nach Anspruch 4, dadurch gekennzeichnet, daß in Schritt (a) als Substrat Heilkräuter verwendet werden.

7. Verfahren nach Anspruch 4 oder 5, dadurch gekennzeichnet, daß in Schritt (a) als Substrat Maisstroh und/oder Zuckerrohrstroh verwendet wird.

8. Verfahren nach Anspruch 4 oder 5, dadurch gekennzeichnet, daß in Schritt (a) als Substrat Körnerfrüchte, Malztreber und/oder Öltreber verwendet werden.

9. Verfahren nach einem der Ansprüche 1 bis 8, dadurch gekennzeichnet, daß in Schritt (b) die Sterilisation des Substrats ohne Verpackung in dünner Schicht kontinuierlich oder diskontinuierlich durchgeführt wird.

10. Verfahren nach Anspruch 9, dadurch gekennzeichnet, daß in Schritt (b) die Sterilisation in einem Autoklaven unter Umwälzung des Substrats mit Dampf unter Überdruck durchgeführt wird.

11. Verfahren nach Anspruch 9 oder 10, dadurch gekennzeichnet, daß in Schritt (b) die Sterilisation unter Flash-Entspannung auf Atmosphärendruck durchgeführt wird.

12. Verfahren nach einem der Ansprüche 9 bis 11, dadurch gekennzeichnet, daß in Schritt (b) etwa 3 min bei etwa 128 °C sterilisiert und etwa 3 min abgekühlt wird.

13. Verfahren nach einem der Ansprüche 9 bis 12, dadurch gekennzeichnet, daß die Sterilisation in Schritt (b) und die Beimpfung in Schritt (c) unmittelbar aufeinanderfolgend so vorgenommen werden, daß das sterilisierte Substrat am Ende bzw. Ausgang des Kühlers mit Pilzmycel beimpft wird.

14. Verfahren nach einem der Ansprüche 1 bis 13, dadurch gekennzeichnet, daß in Schritt (c) zur Beimpfung des Substrats mycelüberwachsenes bzw myceldurchwachsenes Substrat (Brut) verwendet wird.

15. Verfahren nach einem der Ansprüche 2 bis 14, dadurch gekennzeichnet, daß in den Schritten (d) bzw (f) auf die Sperrschicht normale Deckerde aufgebracht wird.

16. Verfahren nach einem der Ansprüche 1 bis 15, ferner gekennzeichnet durch Flashentspannung nach der Sterilisation in Schritt (b) unter Desintegration von Zellen des Substratmaterials und ggfs noch vorhandener Mikroorganismen, Pilzsporen udgl.

17. Verfahren nach einem der Ansprüche 1 und 3 bis 16, ferner gekennzeichnet durch

- Abtrennung des Mycels vom Substrat nach Schritt (e) und

- Trocknen des Mycels.

18. Verfahren nach einem der Ansprüche 1 und 3 bis 17, ferner gekennzeichnet durch Extraktion des Mycelmaterials, ggfs. nach Zelldesintegration, zur Gewinnung von Wirkstoffen und ggfs. Aufkonzentrieren des Extrakts.

19. Verfahren nach einem der Ansprüche 1 und 3 bis 15, ferner gekennzeichnet durch

- Trocknen des mycelbewachsenen Substrats nach Schritt (e),

- Zerkleinern des mycelbewachsenen Substrats,

- gegebenenfalls Zugabe von Zusätzen und

- feuchtigkeitsdichte Verpackung.

20. Anwendung des Verfahrens nach einem der Ansprüche 1, 3 bis 17 und 19 auf die Gewinnung des Mycels von Shiitake (Lentinus edodes (Berk.) sing.).

21. Anwendung des Verfahrens nach einem der Ansprüche 2 bis 16 auf die Kultivierung von Champignons (Agaricus bisporus), Austernpilzen (Pleurotus ostreatus) und Shiitake (Lentinus edodes (Berk.) sing.).

22. Mycel-Trockenpräparate von Shiitake (Lentinus edodes (Berk.) sing.), erhältlich nach dem Verfahren von Anspruch 17.

23. Mycel-Trockenpräparate von Shiitake (Lentinus edodes (Berk.) sing.), erhältlich nach dem Verfahren von Anspruch 19.

24. Verwendung der Mycel-Trockenpräparate nach Anspruch 22, oder 23 als diätetische Nahrungsmittel oder in diätetischen Nahrungsmitteln.

25. Verwendung der Mycel-Trockenpräparate nach Anspruch 22 oder 23 zur Behandlung von Hyperlipämien, Hypercholesterinämien, Gicht, Hypertensionen und Hyperurämien.

26. Pharmazeutische Mittel, gekennzeichnet durch ein Mycel-Trockenpräparat nach Anspruch 22 oder 23.

27. Diätetische Nahrungsmittel, gekennzeichnet durch ein Mycel-Trockenpräparat nach Anspruch 22 oder 23.

28. Vorrichtung zur Durchführung der Sterilisation des Substrats nach Anspruch 1, Schritt (b),

gekennzeichnet durch

einen etwa zylindrischen horizontal oder leicht geneigt angeordneten Autoklaven (1) mit Ein- und Auslaßventilen für Dampf, einer Eintragvorrichtung (2) an einem Ende, einer Austragvorrichtung (4) und einem nachgeschalteten Kühler (9) mit einer Austragvorrichtung (5) sowie einer Umwälzeinrichtung (6) für das durchgesetzte Sterilisationsgut.

29. Vorrichtung nach Anspruch 28, gekennzeichnet durch eine Druckschnecke (2) als Eintragvorrichtung.

30. Vorrichtung nach Anspruch 28 oder 29, gekennzeichnet durch ein in der Längsachse des Autoklaven (1) angeordnetes Schaufelsystem (6) als Umwälzeinrichtung.

31. Vorrichtung nach Anspruch 28 oder 29, gekennzeichnet durch ein in der Längsachse des Autoklaven (1) angeordnetes Schneckensystem (6) als Umwälzeinrichtung.

32. Vorrichtung nach einem der Ansprüche 28 bis 31, gekennzeichnet durch eine am gleichen Ende des Kühlers (9) wie die Austragvorrichtung (5) vorgesehene weitere Eintragvorrichtung (11) zur Zuführung von Beimpfungsmaterial.

33. Vorrichtung nach einem der Ansprüche 28 bis 32, dadurch gekennzeichnet, daß die Eintragvorrichtung (2) und die Austragvorrichtung (4) sowie die Austragvorrichtung (5) zur Flashverdampfung ausgebildet sind.

34. Vorrichtung nach einem der Ansprüche 28 bis 33, gekennzeichnet durch ein Schieberventil oder eine Schleuse als Eintragvorrichtung (2; 11) und/oder als Austragvorrichtung (4; 5).

35. Vorrichtung nach einem der Ansprüche 28 bis 34, gekennzeichnet durch eine oder zwei Autoklaventüren und einen in den Autoklaven einsetzbaren oder einfahrbaren Kulturgefäßträger, um dessen horizontale Längsachse die Kulturgefäße während der Sterilisation drehbar sind.

36. Vorrichtung nach einem der Ansprüche 28 bis 35, dadurch gekennzeichnet, daß sie für kontinuierlichen Betrieb ausgelegt ist.

37. Vorrichtung nach einem der Ansprüche 28 bis 36, dadurch gekennzeichnet, daß lediglich das Ende des Kühlers (9) mit der Eintragvorrichtung (11) und der Austragvorrichtung (5) in einem sterilen Raum vorgesehen ist.

0075614

1/1

**Europäisches Patentamt**

# EUROPÄISCHER RECHERCHENBERICHT

**0075614**
Nummer der Anmeldung

EP 81 10 7777.5

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X,Y | DE - B - 2 151 326 (J. LELLEY) <br> * Ansprüche 1 bis 3; Spalte 3, Zeile 41 bis Spalte 4, Zeile 67 * <br> -- | 1,2-5, 7,8,13, 14,21 |
| Y <br><br><br><br><br> A | WO - A1 - 80/00 400 (J. HARPER) <br> * Ansprüche 1, 4, 5, 7, 11, 12; Seite 3, Zeile 21 bis Seite 5, Zeile 3; Seite 6, Zeile 17 bis Seite 7, Zeile 28; Seite 8, Zeile 28 bis Seite 9, Zeile 26; Seite 11, Zeilen 13 bis 20 * <br> -- | 3-5,7, 8,13, 14 <br><br><br><br> 19,21 |
| X | FR - A - 2 114 202 (LICENCIA TALALMAN- YOKAT ERTEKESITO VALLALAT) <br> * Anspruch 1; Seite 1, Zeilen 1 bis 36; Seite 2, Zeile 29 bis Seite 4, Zeile 7; Seite 4, Zeile 24 bis Seite 7, Zeile 30 * <br> -- | 1,4,5, 7-10,13, 14,21, 28,34 |
| A | Patent Abstracts of Japan <br> Band 1, Nr. 29, 28. März 1977 <br> Seite 1550C76 <br> & JP - A - 51 - 148086 <br> -- | 3,4,7, 17-19 |
| A | Patent Abstracts of Japan <br> Band 2, Nr. 140, 18. November 1978 <br> Seite 3171C78 <br> & JP - A - 53 - 107476 <br> -- <br> ./.. | 1,2, 10-12, 20,21 |

### KLASSIFIKATION DER ANMELDUNG (Int Cl.3)

A 01 G    1/04

### RECHERCHIERTE SACHGEBIETE (Int Cl.3)

A 01 G    1/04

A 01 H    15/00

A 23 L    3/00

A 61 L    2/00

### KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 05-04-1982 | BERGZOLL |

EPA form 1503.1   06.78

Europäisches
Patentamt

**EUROPÄISCHER RECHERCHENBERICHT**

| EINSCHLÄGIGE DOKUMENTE | | | KLASSIFIKATION DER ANMELDUNG (Int. Cl.³) · |
|---|---|---|---|
| Kategorie | Kennzeichnung des Dokuments mit Angabe, soweit erforderlich, der maßgeblichen Teile | betrifft Anspruch | |
| A | Chemical Abstracts Band 92, Nr. 13, 31. März 1980 Columbus, Ohio, USA K. KUMABE "Shiitake extract paste" Spalte 1, Abstract Nr. 109446a & JP – A – 79 151 172 | 22,25, 27 | |
| A | Chemical Abstracts Band 76, Nr. 24, 12. Juni 1972 Columbus, Ohio, USA A. TENSHO et al. "Hypolipidemic lentysine from Lentinus" Seite 276, Spalte 2, Abstract Nr. 144801d & JP – A – 7 203 751 | 22,25, 27 | RECHERCHIERTE SACHGEBIETE (Int. Cl.³) |
| Y | DE – A1 – 2 618 182 (H.J. HEINZ CO. LTD.) * Ansprüche 1 bis 3, 6 bis 11, 22, 23; Seite 1, Zeilen 11 bis 14; Seite 2, Zeile 9 bis Seite 5, Zeile 10; Seite 6, Zeile 20 bis Seite 8, Zeile 8; Seite 13, Zeilen 10 bis 14; Seite 15, Zeile 6 bis Seite 17, | 28-32, 36,37 | |
| A | Zeile 9; Seite 22, Zeile 1 bis Seite 23, Zeile 7; Fig. 1, 4 * | 9-13,16 34 | |

./..

Europäisches
Patentamt

EUROPÄISCHER RECHERCHENBERICHT

**0075614**
Nummer der Anmeldung

EP 81 10 7777.5

- page 3 -

| | EINSCHLÄGIGE DOKUMENTE | | KLASSIFIKATION DER ANMELDUNG (Int. Cl.³) · |
|---|---|---|---|
| Kategorie | Kennzeichnung des Dokuments mit Angabe, soweit erforderlich, der maßgeblichen Teile | betrifft Anspruch | |
| Y | FR - A1 - 2 260 357 (H. WOLFF APPARATE-BAU) <br><br> * Ansprüche 1, 3, 4, 6, 7; Seite 2, Zeile 19 bis Seite 4, Zeile 13, Fig. * <br><br> & DE - A - 2 405 807 <br><br> ----- | 28-32, 36,37 | |
| | | | RECHERCHIERTE SACHGEBIETE (Int. Cl.³) |